# EUROPEAN PATENT SPECIFICATION

(11) **EP 1 648 235 B1**
(45) Date of publication and mention of the grant of the patent: **13.01.2010**
(21) Application number: 03738846.9
(22) Date of filing: 03.07.2003
(51) Int. Cl.: A21B 3/15, A47J 37/00, A47J 36/02

(54) **DEVICE AND METHOD FOR FRYING AND GRILLING**
VORRICHTUNG UND VERFAHREN ZUM BRATEN UND GRILLEN
DISPOSITIF ET PROCEDE DE FRITURE ET DE GRILLADE

(43) Date of publication of application: 26.04.2006
(73) Proprietor: Forsströms Innovative Products AB, 612 22 Finspang (SE)
(72) Inventor: DAHLGREN, Inge, S-441 30 Alingsas (SE); FORSSTRÖM, Christer, S-115 23 Stockholm (SE); FORSSTRÖM, Stephan, S-612 91 Finspang (SE)
(74) Representative: Berglund, Erik Wilhelm
(86) International application number: PCT/SE2003/001167
(87) International publication number: WO 2005/002342

(56) References cited:
- EP-A- 0 407 982
- EP-A1- 0 206 121
- EP-A1- 0 594 374
- GB-A- 2 326 331
- US-A1- 2002 094 424

## Description

For the grilling or frying (meat,fish,poultry etc. = product) frying pans or in the case of restaurants special frying tops or frying tables are heated to high temperatures (150-300 Centigrade). The high temperature is initially intended to achieve following purposes: a: to close or seal the surface of the product so that the juice is retained inside the product. b: to obtain a golden brown surface (taste and visibility approach).

The core of the product is heated until the desired depth of the heating is obtained. In order to prevent the product from sticking to the grilling or frying surface a generous application of vegetable oil or butter etc. is used, unless the product itself contains a sufficient amount of fat.

The need for vegetable oil or butter has been eliminated by the use of non-stick layers of for instance PTFE. The PTFE layer is however sensitive to mechanical abrasion resulting from the contact with skillets when the cook with a skillet turns the meat over. From EP 0 594 374 A1 it is known to arrange particles on a frying surface prior to applying a non-stick coating which increase the anchoring of the non-stick layer and improve the abrasion resistance. From EP 0 206 121 A1 it is also known to improve the grip for the nons-stick layer by preparing the surface with a layer of Nickel - Aluminum or Chrome - Nickel. From EP 0407 982 A2 it is previously known to clamp a meat product between a grill and crown potions formed in a cooking pan. The meat is then subjected to heat from in particular high velocity air jets that impinge on the meat.

The above way of preparing food give a tasty and visually pleasing result but is very time consuming due to the individual repeated handling of each piece of the product that all have to be turned over. This is frequently a problem if several persons are to be served at the same time all wanting the same or different fried or grilled food. This problem is today solved at restaurants by having several grills or fryers and if at home several persons are to be provided with grilled or fried food several single pieces or batches have to be fried after each other and then be kept warm or be inserted at different times for different persons. This results in a lot of man hours in the preparation of the food. In particular this means a considerable cost impact for restaurants where the kitchen will be over-staffed most of the time. At high peaks (lunches) however the kitchen may instead become understaffed, which may be a problem in itself since it may result in quality variations. Also at home this will have the disadvantage of keeping one person (usually the hostess) very busy before the meal.

It also deserves to be noted that fried or grilled food at high quality today is an impossibility were a large number of people are to be fed as for instance in hospitals and schools by a limited number of cooks.

As seen from above there exist today a need for methods and devices that make possible rapid frying or grilling of food on a large scale despite limited space and man power, in order to provide several persons with food at practically the same time, and with the food also being freshly made.

The above problems are in a surprisingly simple way solved with a method at which frying or grilling of a food product is carried out in a convection oven and the food product is placed on a frying plate of aluminum alloy coated with a food release agent on at least one side, said aluminum frying pan being 2 mm thick.

The frying plate may be made of an aluminum based alloy coated with a heat resistant release agent like teflon, "Rilon hard" a preferably rubber silicon based coating with the same or better heat resistant and release properties for different or specific types of food.

The food processing plate in accordance with the invention is made of an aluminum alloy containing 0,05% silicon to 15%, preferably 0,5 to 1,6%, and in particular 1 % silicon has proven itself to be very advantageous. Such an aluminum plate can be press-formed to provide it with an upturned rim for the retention of possible juice from the processed food. Also it will be possible to form depressions for particular food pieces, facilitating the arranging of these on the plate. The press-forming may be facilitated by preheating the material with magnetic heating techniques.

The primary object of the plate coating of is to prevent the food or its emitted juices from sticking to the plate. This coating may also serve to protect the aluminum alloy from corrosion caused by the cleaning of plates etc. with the normally very corrosive detergents. If in addition or instead the alloy can be made less prone to corrosion in itself this is of course an advantage. If the plate come in contact with the food on one side only this side need to be coated with a release agent to prevent the food from sticking, whereas the other side only have to be protected from corrosion and thus may have an other coating

When the plate according to the invention is to be used for frying or grilling in place of a frying pan or a frying top the food pieces are without the adding of any butter, oil or other fat placed on the frying plate of the invention distributed over this. Then the plate is inserted into a convection oven of the warm air type, where it is subjected to a high temperature (up to 250 C°) circulating air for a few minutes, for instance 4 to 8 minutes depending on size and intended degree of rareness for instance of meat. From above the surface will be closed and browned by the circulated hot air, from below by the composite material plate, that in turn is heated from below by the high temperature air. When the meat after a few minutes is taken out from the oven the intended browned surface has been obtained and a product with good taste is obtained, where the pores or openings in the meat surface are closed at all sides essentially simultaneously retaining the juices of the meat inside this.

By placing several frying plates in an oven the number of for instance steaks that can be prepared is increased and by using large ovens that however need not take much floor space high stacks of baking plates can be treated fried or grilled simultaneously allowing a high production rate without quality sufferings. An additional advantages that should be mentioned is that the meat is fried simultaneously on top and bottom which means that all the surfaces will be browned and sealed simultaneously retaining the product juice inside the food in a higher degree than with conventional frying pans.

Furthermore no butter, oil, etc. is needed and no fat is thus added to the product and less fat is evaporated into the environment, or has to be scraped off the frying device.

The simplicity with which the good results of the invention are obtained has surprised the men skilled in the art (the chefs).

An explanation of the good result with the invention is due to the fact that the metal composite alloy frying plates will absorb from the air and transfer very rapidly heat to the locations where heat is drained of, that is the places of the food. The entire surface of a plate that is not in contact with the food absorbs heat from the circulating high temperature air and conduct this swiftly to the pieces of food. The upper sides are instead heated directly by the surrounding heated air. The temperature gradient in the plate while transporting heat is very low and the difference in the temperature between the air and the bottom side of the food will be small and negligible.

The invention can be used for a high variety of food, such as :meat, minced meat, frying eggs, pancakes of different types, pizza, vegetables, poultry, fish, bread and pastry.

The invention may also increase the number of dishes that can be provided by small kitchens as for instance in homes for elderly, offices, small fast food restaurants etc.

Further advantages and features of the invention are apparent from the appended claims.

A kitchen which uses the invention may contain a work station for the preparing of food that is to be fried or grilled. An oven may be situated next to an open space for the parking of a wheel provided shelf that has such a size that it can be rolled into a correspondingly designed oven in its entirety. Next to a parking space for the wheel provided shelf a work bench is situated for food preparation. The food is prepared on the work bench, placed on one of the baking/frying plates that is then pushed into the shelf. The shelf may be elevatable hydraulically or electrically to allow an easy entering of the baking plates into this without stooping and lifting or lowering of the plates. When ready and when the food is to be fried the shelf is entered into the oven, that is switched on and when the food has been prepared the shelf is returned to its original position and the plates are successively withdrawn and the food placed on platters and served. If the flow of customers is slower and continuous the plates may of course successively be independently entered and withdrawn from the shelf in the oven.

The food that has been prepared and placed on plates or grids according to the invention can after the preparation be placed in a cooled storage space, for instance over the night, then in the morning to be transferred to the oven. The shelf together with plates and food may be transferred as one unit between these stations giving an efficient logistic.

The possibility of replacing frying pans with coated aluminum alloy baking plates give a great gain in space, even a small oven may be able to take five frying plates with a total area corresponding to 1.5 meters of frying surface. To this gain can then also be added the reduction of emitted vapors and gases plus a considerable reduction in production time. Three frying plates are equal to a frying pan or top of 1000 mm x 600 mm! !

Through the general avoiding of fat in which food is normally fried in order to prevent sticking the heat is more rapidly transferred to the food partly because the contact is direct and partly because there is no "alien" fat that has to be heated before the actual food is heated. The melting and evaporating of the added fat also consumes a lot of energy.

The invention may even extend to frying tops, where the thickness instead may be up to a centimeter. In the case of grille grids the bars are coated all around and the bars may also be hollow pipes or tubes.

The plate concept can as has been mentioned above be used also for frying tops, furthermore it may be used for heating or cooling plates, in ovens or other appliances in household or commercial kitchens.

The plates according to the invention can of course not only be used for the preparation of meat by frying but also for the preparation of other types of food where the temperature is less, including baking.

## Claims

1. Method for frying or grilling a food product **characterized in that** it is carried out in a convection oven and that the food product is placed on a food processing plate of aluminum alloy containing 0.05% silicon to 15%, preferably 0.5 to 1.6% and in particular 1 % silicon coated with a food release agent on at least one side, said plate being 2 mm thick.

2. Method according to claim 1, **characterized in** the use of an oven large enough to allow a wheel-provided shelf to be rolled into the oven with a great number of food processing plates, loaded with products.

3. Method according to claim 1 or 2 **characterized in that** the product is pre-fabricated, pre-loaded and stored in a refrigerated area before being transferred to the convection oven for frying, grilling etc.

4. Food processing plate for use in a method according to claim 1, **characterized in that** it is made of a heat transfer effective aluminum alloy containing 0.05% silicon to 15%, preferably 0.5 to 1.6% and in particular 1 % silicon coated with a food release agent on at least one side, said plate being 2 mm thick.

5. Plate according to claim 4, **characterized in that** it on one or both sides is/are coated with a coating protecting the aluminum substrate against corrosion (for instance caused by detergent liquids used for cleaning).

6. Plate according to any of the claims 4 or 5 **characterized in that** the food release coating include teflon, silicon, nickel or chromium.

## Patentansprüche

1. Verfahren zum Braten oder Grillen eines Nahrungsmittelerzeugnisses, **dadurch gekennzeichnet, dass** es in einem Konvektionsofen eingeführt wird, und dass das Nahrungsmittelerzeugnis auf eine Nahrungsmittel-Bearbeitungsplatte aus einer Aluminiumlegierung gelegt wird, welche 0,05 % bis 15 % Silizium, vorzugsweise 0,5 bis 1,6 % Silizium und insbesondere 1 % Silizium enthält, und die mit einem NahrungsmittelTrennmittel auf wenigstens einer Seite beschichtet ist, wobei die Platte 2 mm dick ist.

2. Verfahren nach Anspruch 1, **dadurch gekennzeichnet, dass** ein Ofen eingesetzt wird, welcher so ausreichend groß ist, dass ein mit Rädern versehenes Gestell mit einer großen Anzahl von Nahrungsmittelbearbeitungsplatten in den Ofen gefahren werden kann, welche mit Erzeugnissen beschickt sind.

3. Verfahren nach Anspruch 1 oder 2, **dadurch gekennzeichnet, dass** das Erzeugnis vorgefertigt, vorbeschickt und in einem Kühlbereich gelagert ist, bevor es in den Konvektionsofen zum Braten, Grillen usw. transportiert wird.

4. Nahrungsmittelbearbeitungsplatte zur Verwendung in einem Verfahren nach Anspruch 1, **dadurch gekennzeichnet, dass** sie aus einer Wärmeübertragungs-Effektiv-Aluminiumlegierung hergestellt ist, welche 0,05 % bis 15 % Silizium, vorzugsweise 0,5 bis 1,6 % Silizium und insbesondere 1 % Silizium enthält, die auf wenigstens einer Seite mit einer Nahrungsmittel-Trennmittel beschichtet ist und 2 mm dick ist.

5. Platte nach Anspruch 4, **dadurch gekennzeichnet, dass** sie auf einer oder beiden Seiten mit einer das Aluminiumsubstrat vor Korrosion schützenden Schicht beschichtet ist (die beispielsweise durch zum Reinigen eingesetzte Reinigungsflüssigkeit verursacht wird).

6. Platte nach Anspruch 4 oder 5, **dadurch gekennzeichnet, dass** die Nahrungsmittel-Trennmittelbeschichtung Teflon, Silizium, Nickel oder Chrom umfasst.

## Revendications

1. Procédé pour frire ou griller un produit alimentaire, **caractérisé en ce qu'**il est mis en oeuvre dans un four à convection et **en ce que** le produit alimentaire est placé sur une plaque de préparation d'aliments en alliage d'aluminium contenant 0,05 % de silicium à 15 %, de préférence 0,5 à 1,6 % et en particulier 1 % de silicium, revêtue avec un agent antiadhésif pour aliments sur au moins un côté, ladite plaque étant épaisse de 2 mm.

2. Procédé selon la revendication 1, **caractérisé par** l'utilisation d'un four suffisamment grand pour permettre de faire rouler une étagère sur roulettes jusque dans le four avec un grand nombre de plaques de préparation d'aliments chargées de produits.

3. Procédé selon la revendication 1 ou 2, **caractérisé en ce que** le produit est pré-fabriqué, pré-chargé et stocké dans une zone réfrigérée avant d'être transféré dans le four à convection pour le frire, le griller, etc.

4. Plaque de préparation d'aliments pour une utilisation dans un procédé selon la revendication 1, **caractérisée en ce qu'**elle est faite d'un alliage d'aluminium à transfert thermique efficace contenant 0,05 % de silicium à 15 %, de préférence 0,5 à 1,6 % et en particulier 1 % de silicium, revêtue avec un agent antiadhésif pour aliments sur au moins un côté, ladite plaque étant épaisse de 2 mm.

5. Plaque selon la revendication 4, **caractérisée en ce que** l'un des côtés ou les deux est/sont revêtu(s) avec un revêtement protégeant le substrat d'aluminium contre la corrosion (par exemple provoquée par les détergents liquides utilisés pour le nettoyage).

6. Plaque selon l'une quelconque des revendications 4 ou 5, **caractérisée en ce que** le revêtement antiadhésif pour aliments inclut du téflon, du silicium, du nickel ou du chrome.
